# EUROPÄISCHE PATENTSCHRIFT

(11) **EP 3 322 911 B1**
(45) Veröffentlichungstag und Bekanntmachung des Hinweises auf die Patenterteilung: **11.03.2020**
(21) Anmeldenummer: 16738114.4
(22) Anmeldetag: 07.07.2016
(51) Int. Cl.: F16F 9/32

(54) **SCHWINGUNGSDÄMPFER MIT KOHLEFASERDÄMPFERROHR MIT GEWINDEADAPTER FÜR KRAFTFAHRZEUG**
VIBRATION DAMPER COMPRISING A CARBON FIBER DAMPER TUBE HAVING A THREADED ADAPTER FOR A MOTOR VEHICLE
AMORTISSEUR DE VIBRATIONS ÉQUIPÉ D'UN TUBE AMORTISSEUR EN FIBRE DE CARBONE À ADAPTATEUR FILETÉ POUR VÉHICULE AUTOMOBILE

(30) Priorität: 15.07.2015 DE 102015213308
(43) Veröffentlichungstag der Anmeldung: 23.05.2018
(73) Patentinhaber: ThyssenKrupp Bilstein GmbH, 58256 Ennepetal (DE); thyssenkrupp AG, 45143 Essen (DE)
(72) Erfinder: DÖBBER, Johannes, 48165 Münster (DE)
(74) Vertreter: thyssenkrupp Intellectual Property GmbH
(86) Internationale Anmeldenummer: PCT/EP2016/066140
(87) Internationale Veröffentlichungsnummer: WO 2017/009174

(56) Entgegenhaltungen:
- DE-A1-102011 109 362
- DE-A1-102013 215 602
- DE-B3- 10 313 477
- DE-B3-102013 201 301
- FR-A2- 2 309 453
- GB-A- 704 671
- US-A- 4 704 918

## Beschreibung

Die vorliegende Erfindung betrifft einen Schwingungsdämpfer für ein Kraftfahrzeug, ein Kohlefaserdämpferrohr für Fahrzeugstoßdämpfer und ein Verfahren zum Herstellen eines Kohlefaserdämpferrohres.

### Stand der Technik

Fahrzeugstoßdämpfer mit Dämpferrohren sind im Stand der Technik in einer Vielzahl von Ausführungsformen bekannt. Insbesondere sind Leichtbauweisen bei Einrohr-Dämpfern bekannt, welche Dämpferrohre aus Aluminium oder Carbonfaser verstärktem Kunststoff (CFK) aufweisen. Dämpferrohre aus CFK kommen meist ohne metallische Funktions- beziehungsweise Lauffläche aus und ermöglichen im Vergleich zu metallischen Werkstoffen eine Gewichtsreduktion bei wenigstens gleichbleibenden Festigkeitseigenschaften. Die Befestigung der Dämpferrohre an der Karosserie und/oder der/dem Radaufhängung/Radträger eines Fahrzeugs erfolgt über Lasteintragselemente, wobei diese Lasteintragselemente insbesondere aus metallischen Werkstoffen hergestellt sind und z.B. mit Gewinde- oder Sprengringverbindungen mit an den CFK-Dämpferrohren angeordneten Inlets befestigt werden. Bei der Verbindung der Lasteintragselemente an den CFK-Dämpferrohren sollte die Möglichkeit gewährleistet sein, Betriebslasten fasergerecht in die Rohrstruktur einleiten zu können. Insbesondere ist die Anbindung solcher Lasteintragselemente an die CFK-Dämpferrohre problematisch und es kann im Betrieb zu Beschädigungen der CFK-Dämpferrohre insbesondere im Anbindungsbereich kommen.

Aus der DE 103 13 477 B3 ist ein Zylinderrohr für einen Arbeitszylinder bekannt und das Zylinderrohr weist ein aus thermoplastischem Kunststoff ausgebildetes Innenrohr und ein das Innenrohr radial umschließenden, koaxial angeordnetes Außenrohr auf, das aus einem faserverstärkten thermoplastischen Kunststoff hergestellt ist. Dieser faserverstärkte Kunststoff kann beispielsweise ein Kohlefaserverbundwerkstoff sein.

Aus der DE 10 2011 109 362 A1 ist ein Stoßdämpfer für ein Fahrzeug mit einem Stoßdämpferrohr aus einem Kohlefaserverbundwerkstoff bekannt, wobei das Stoßdämpferrohr ein Verbindungselement mit einem Verbindungsauge aufweist.

Aus der DE 10 2013 215602 A1 ist eine Anordnung für einen Schwingungsdämpfer eines Fahrzeugs bekannt.

Der vorliegenden Erfindung liegt daher die Aufgabe zugrunde einen verbesserten Stoßdämpfer und/oder ein Kohlefaserdämpferrohr für Fahrzeugstoßdämpfer und ein verbessertes Verfahren zum Herstellen eines Kohlefaserdämpferrohrs bereitzustellen, bei welchem die zuvor genannten Nachteile vermieden werden. Insbesondere soll mit diesem verbesserten Stoßdämpfer und/oder Kohlefaserdämpferrohr für Fahrzeugstoßdämpfer und dem verbesserten Verfahren zum Herstellen eines Kohlefaserdämpferrohrs eine fasergerechte und/oder gleichmäßige Einleitung von Betriebslasten in die Rohrstruktur des Kohlefaserdämpferrohrs möglich sein. Zudem sollen durch auf das und/oder in das Kohlefaserdämpferrohr des Stoßdämpfers eingetragene Betriebsbelastung(en) hervorgerufene Beschädigungen insbesondere an dem Kohlefaserdämpferrohr wenigstens reduziert und die Lebensdauer des erfindungsgemäßen Stoßdämpfers und des Kohlefaserdämpferrohr verlängert werden. Insbesondere soll in einem Anbindungsbereich von Lasteintragungselementen die Anfälligkeit insbesondere bei dynamischen Belastungen gegen ein Ausreißen, insbesondere von Inlets und/oder Adaptern zur Anbindung dieser Lasteintragungselemente verbessert werden. Des Weiteren sollen Beschädigung des Kohlefaserdämpferrohrs bei Zug- Druckwechselbelastungen des Stoßdämpfers vermindert werden. Insbesondere soll die Möglichkeit bestehen, das Kohlefaserdämpferrohr des Stoßdämpfers im Anbindungsbereich zu Lasteintragungselementen hinsichtlich dynamischer Festigkeitseigenschaften, Temperaturbeständigkeit, Bauraumvolumen und Gewicht zu verbessern. Des Weiteren soll der verbesserte Stoßdämpfer mit dem Kohlefaserdämpferrohr im Vergleich zu konventionellen Stoßdämpfern zu einem verbesserten Fahrverhalten eines Fahrzeuges führen. Zudem soll ein Fahrzeugstoßdämpfer mit einem verringertem Korrosionspotential, reduzierten Teil- und ungefederten Massen und gesteigerten Fahrkomfort zur Verfügung gestellt werden. Des Weiteren soll mit diesem verbesserten Stoßdämpfer und/oder Kohlefaserdämpferrohr eine einfache und zuverlässige Dichtfunktion gewährleistet sein. Zudem soll mit dem verbesserten Verfahren zum Herstellen eines Kohlefaserdämpferrohrs ein stabiler und vereinfachter Herstellungsprozess mit einer reduzierten Anzahl an Fertigungsschritten und Fertigungsteilen zur Verfügung gestellt werden.

### Offenbarung der Erfindung

Diese Aufgabe wird mit einem Stoßdämpfer nach Anspruch 1, ein Kohlefaserdämpferrohr nach Anspruch 5 und ein Verfahren nach Anspruch 7 gelöst.

Der erfindungsgemäße Schwingungsdämpfer für ein Kraftfahrzeug, umfassend mindestens ein Kohlefaserdämpferrohr und ein mit dem Dämpferrohr verbundenes Lasteinleitungselement weist gegenüber konventionellen Stoßdämpfern den Vorteil auf, dass Betriebslasten fasergerecht in die Rohrstruktur des Dämpferrohrs eingeleitet werden. Ein weiterer Vorteil des erfindungsgemäßen Stoßdämpfers ist eine im Vergleich zu konventionellen Stoßdämpfern geringere Anfälligkeit insbesondere bei dynamischen Belastungen gegen Beschädigungen, insbesondere eines Ausreißens des Kohlefaserdämpferrohrs, von Inlet(s) und/oder Adapter(n).

Das erfindungsgemäße Verfahren zum Herstellen mindestens eines Kohlefaserdämpferrohres, insbesondere zum Herstellen von CFK Dämpferrohren für Fahrzeuge weist gegenüber konventionellen Verfahren den Vorteil eines stabilen und vereinfachten Herstellungsprozesses mit einer reduzierten Anzahl an Fertigungsschritten und Fertigungsteilen auf. Ein weiterer Vorteil des erfindungsgemäßen Verfahrens ist, dass es in bereits bestehende Verfahren einfach und zuverlässig integriert werden kann.

Gegenstand der Erfindung ist daher ein Schwingungsdämpfer für ein Kraftfahrzeug, umfassend
- ein Kohlefaserdämpferrohr mit einem Dämpferrohrinnendurchmesser und einem Dämpferrohraußendurchmesser, wobei sich an mindestens einem Ende des Kohlefaserdämpferrohrs der Dämpferrohrinnendurchmesser wenigstens teilweise konisch verjüngt,
- eine in dem Kohlefaserdämpferrohr ein- und ausfahrbare Kolbenstange,
- mindestens ein Adapter mit einem konischen Abschnitt, wobei der konische Abschnitt des Adapters innerhalb des sich wenigstens teilweise konisch verjüngenden Endes des Kohlefaserdämpferrohrs angeordnet ist und eine wenigstens formschlüssige Verbindung wenigstens in Richtung des sich wenigstens teilweise konisch verjüngenden Endes des Kohlefaserdämpferrohrs mit selbigen ausbildet,
wobei der mindestens eine Adapter mindestens einen Gewindeabschnitt aufweist, wobei auf diesen Gewindeabschnitt ein Konterelement mit einem Gegengewinde aufgeschraubt ist, welches an der Stirnfläche des sich wenigstens teilweise konisch verjüngenden Endes des Kohlefaserdämpferrohrs angeschlagen ist und den mindestens einen Adapter kraftschlüssig gegen die Stirnfläche des sich wenigstens teilweise konisch verjüngenden Endes des Kohlefaserdämpferrohrs verspannt.

Ein weiterer Gegenstand der Erfindung ist ein Kohlefaserdämpferrohr für einen Fahrzeugstoßdämpfer umfassend einen Dämpferrohrinnendurchmesser und einen Dämpferrohraußendurchmesser, wobei sich an mindestens einem Ende des Kohlefaserdämpferrohrs der Dämpferrohrinnendurchmesser wenigstens teilweise konisch verjüngt, umfassend mindestens ein Adapter mit einem konischen Abschnitt, wobei der konische Abschnitt des Adapters innerhalb des sich wenigstens teilweise konisch verjüngenden Endes des Kohlefaserdämpferrohrs angeordnet ist und eine wenigstens formschlüssige Verbindung wenigstens in Richtung des sich wenigstens teilweise konisch verjüngenden Endes des Kohlefaserdämpferrohrs mit selbigen ausbildet, wobei der mindestens eine Adapter mindestens einen Gewindeabschnitt aufweist, wobei auf diesen Gewindeabschnitt ein Konterelement mit einem Gegengewinde aufgeschraubt ist, welches an der Stirnfläche des sich wenigstens teilweise konisch verjüngenden Endes des Kohlefaserdämpferrohrs angeschlagen ist und den mindestens einen Adapter kraftschlüssig gegen die Stirnfläche des sich wenigstens teilweise konisch verjüngenden Endes des Kohlefaserdämpferrohrs verspannt.

Ein weiterer Gegenstand der Erfindung ist ein Lasteinleitungselement zum Anschluss an ein Kohlefaserdämpferrohr wobei das Lasteinleitungselement wenigstens teilweise aus einem Kohlefaserverbundwerkstoff ausgebildet ist.

Ein weiterer Gegenstand der Erfindung ist ein Verfahren zum Herstellen mindestens eines Kohlefaserdämpferrohres, umfassend die Schritte:
a) Bereitstellen eines oder mehrerer stabförmigen/r Wickelkerns/e, wobei der eine oder die mehreren stabförmige/n Wickelkern(e) wenigstens einen konisch verjüngenden Abschnitt mindestens für ein Kohlefaserdämpferrohrende jede(s) herzustellende(n) Kohlefaserdämpferrohr(e) aufweist/en;
b) Bereitstellen eines oder mehrerer Inlays;
c) Bereitstellen mindestens eines Trennmittels;
d) Bereitstellen mindestens eines benetzten Kohlefaserfilaments;
e) Bereitstellen eines oder mehrerer Adapter(s), wobei der eine oder die mehreren Adapter wenigstens einen konisch verjüngenden Abschnitt und mindestens ein Gewindeabschnitt aufweist/en;
f) Bereitstellen eines oder mehrerer Konterelemente(s), wobei das eine oder die mehreren Konterelement(e) mindestens ein Gegengewinde aufweist/en;
g) Anordnen des oder der in Schritt a) bereitgestellten stabförmigen Wickelkerns/e in einer Wickelvorrichtung und des oder der in Schritt b) bereitgestellten Inlays an dem oder zwischen den in Schritt a) bereitgestellten stabförmigen Wickelkern/en jeweils auf der dem konisch verjüngenden Abschnitt abgewandten Seite des/der jeweilig herzustellenden Kohlefaserdämpferrohre(s);
h) Auftragen des in Schritt c) bereitgestellten Trennmittels wenigstens teilweise auf die Mantelfläche des/der in Schritt f) angeordneten stabförmigen Wickelkerns/e;
i) Umwickeln des/der in Schritt g) angeordneten stabförmigen Wickelkerns/e und Inlays mit dem in Schritt d) bereitgestellten mindestens einen benetzten Kohlefaserfilament;
j) Verfestigen, insbesondere Aushärten des in Schritt i) umwickelten mindestens einen benetzten Kohlefaserfilaments unter Ausbildung eines Kohlefaserverbundwerkstoffs;
k) Vereinzeln des in Schritt j) ausgebildeten Kohlefaserverbundwerkstoffs und Herstellen eines oder mehrerer Kohlefaserdämpferrohrs/e unter Ausbildung einer Stirnfläche eines sich wenigstens teilweise konisch verjüngenden Endes des einen oder der mehreren Kohlefaserdämpferrohrs/e;
l) Entfernen des/der in Schritt i) umwickelten stabförmigen Wickelkerns/e aus den in Schritt k) hergestellten einen oder mehreren Kohlefaserdämpferrohrs/e;
m) Anordnen mindestens eines der in Schritt e) bereitgestellten Adapter jeweils innerhalb des wenigstens einen konisch verjüngenden Abschnitts eines Kohlefaserdämpferrohrendes eines Kohlefaserdämpferrohres der in Schritt k) vereinzelten und in Schritt l) von stabförmigen Wickelkern/en entfernten einen oder mehreren Kohlefaserdämpferrohrs/e;
n) Verspannen des/der in Schritt m) angeordneten Adapters mit dem in Schritt f) bereitgestellten einen oder mehrerer Konterelemente(s) gegen die in Schritt k) ausgebildete Stirnfläche des sich wenigstens teilweise konisch verjüngenden Endes des einen oder der mehreren Kohlefaserdämpferrohrs/e;
wobei das Verspannen in Schritt n) durch Verschrauben des mindestens einen Gewindeabschnitts des mindestens einen Adapters mit dem Gegengewinde des Konterelements durchgeführt wird und eine wenigstens kraftschlüssige Verbindung ausgebildet wird.

Insbesondere wird mit dem Verschrauben des mindestens einen Gewindeabschnitts des mindestens einen Adapters mit dem Gegengewinde des Konterelements eine wenigstens formschlüssige Verbindung hergestellt.

Ein weiterer Gegenstand der Erfindung ist die Verwendung eines Kohlefaserdämpferrohres für einen Schwingungsdämpfer, umfassend einen Dämpferrohrinnendurchmesser und einen Dämpferrohraußendurchmesser, wobei sich an mindestens einem Ende des Kohlefaserdämpferrohrs der Dämpferrohrinnendurchmesser wenigstens teilweise konisch verjüngt, umfassend mindestens ein Adapter mit einem konischen Abschnitt, wobei der konische Abschnitt des Adapters innerhalb des sich wenigstens teilweise konisch verjüngenden Endes des Kohlefaserdämpferrohrs angeordnet ist und eine wenigstens formschlüssige Verbindung wenigstens in Richtung des sich wenigstens teilweise konisch verjüngenden Endes des Kohlefaserdämpferrohrs mit selbigen ausbildet, wobei der mindestens eine Adapter mindestens einen Gewindeabschnitt aufweist, wobei auf diesen Gewindeabschnitt ein Konterelement mit einem Gegengewinde aufgeschraubt ist, welches an der Stirnfläche des sich wenigstens teilweise konisch verjüngenden Endes des Kohlefaserdämpferrohrs angeschlagen ist und den mindestens einen Adapter kraftschlüssig gegen die Stirnfläche des sich wenigstens teilweise konisch verjüngenden Endes des Kohlefaserdämpferrohrs verspannt.

Die Erfindung kann sowohl in dem Schwingungsdämpfer für ein Kraftfahrzeug als auch in einem Kohlefaserdämpferrohr für ein Kraftfahrzeug, als auch in einem Lasteinleitungselement zum Anschluss an ein Kohlefaserdämpferrohr verwirklicht sein.

### Detaillierte Beschreibung der Erfindung

Im Rahmen der vorliegenden Erfindung wird unter einem Kohlefaserdämpferrohr ein Stoßdämpferrohr verstanden in welchem mindestens ein Stoßdämpferkolben gleitend geführt werden kann und welches wenigstens teilweise aus einem Kohlefaserverbundwerkstoff ausgebildet ist.

Im Stand der Technik ist der Begriff Kohlefaserverbundwerkstoff auch bekannt als Kohlenstofffaserverstärkter Kunststoff (KFK), carbonfaserverstärkter Kunststoff (CFK), oder carbon-fiber-reinforced plastic (CFRP). Unter einem Kohlefaserverbundwerkstoff wird im Rahmen der vorliegenden Erfindung ein Werkstoffverbund aus wenigstens zwei Komponenten verstanden, wobei eine erste Kohlefaserkomponente in einer Matrix als eine zweite Komponente eingebettet ist. Insbesondere sind in dem erfindungsgemäßen Kohlefaserverbundwerkstoff Kohlenstofffasern in einer Kunststoff-Matrix eingebettet. Die Matrix dient insbesondere zur Verbindung der Kohlenstofffasern sowie zum Füllen von Zwischenräumen. Als Kunststoffmatrixwerkstoffe können beispielsweise Systeme eingesetzt werden, welche ausgewählt sind unter Kunststoffharz, insbesondere Vinylester, Epoxidharz und Polyurethan, Duromeren, Thermoplasten insbesondere Polyamiden, wie beispielsweise Polyamid 6.6, Polyaryletherketonen, wie beispielsweise Polyetheretherketon, Polyethyleniminen und Kombinationen hiervon.

Im Rahmen der vorliegenden Erfindung wird unter einem Dämpferrohrinnendurchmesser der Innendurchmesser des Kohlefaserdämpferrohrs verstanden, in welchem sich ein an der ein- und ausfahrbaren Kolbenstange angeordneter Kolben bewegt. Insbesondere ist die wenigstens teilweise konische Verjüngung des Dämpferrohrinnendurchmessers nicht der Dämpferrohrinnendurchmesser.

Unter einem Adapter wird im Rahmen der vorliegenden Erfindung ein wenigstens in dem innerhalb des sich konischen verjüngenden Bereiches des Kohlefaserdämpferrohrs angeordnetes Element verstanden, welches sich mit einem wenigstens teilweise an der Außenseite des Kohlefaserdämpferrohrs angeordneten Elementes, insbesondere eines Konterelements wenigstens verbinden, vorzugsweise verspannen lässt.

Im Rahmen der vorliegenden Erfindung wird unter einem Gegengewinde ein Gewinde verstanden, welches wirktechnisch mit einem Gewindeabschnitt verbunden, insbesondere auf diesen Gewindeabschnitt aufgeschraubt werden kann.

Unter Stirnfläche wird bei einem Querschnitt durch das Kohlefaserdämpferrohr die stirnseitige Ringfläche an der Schnittfläche verstanden.

In einer weiteren bevorzugten Ausführungsform der Erfindung ragt der mindestens eine Adapter aus dem Ende des Kohlefaserdämpferrohrs hinaus und der mindestens eine Gewindeabschnitt ist im Bereich der Außenmantelfläche des aus dem Ende des Kohlefaserdämpferrohrs hinaus ragenden Adapters angeordnet.

In einer weiteren bevorzugten Ausführungsform der Erfindung ist der mindestens eine Adapter als ein Lasteinleitungselement ausgebildet oder an dem Adapter das eine Lasteinleitungselement angeordnet. Beispielsweise erfüllt der Adapter neben seiner eigentlichen Funktion gleichzeitig die Funktion eines Lasteinleitungselements. Insbesondere ist der Adapter mit einem Lasteinleitungselement einstückig ausgebildet.

In einer weiteren bevorzugten Ausführungsform der Erfindung ist das Konterelement als ein Lasteinleitungselement ausgebildet oder an dem Konterelement das eine Lasteinleitungselement angeordnet. Beispielsweise erfüllt das Konterelement neben seiner eigentlichen Funktion gleichzeitig die Funktion eines Lasteinleitungselements. Insbesondere ist das Konterelement mit einem Lasteinleitungselement einstückig ausgebildet.

Das Lasteinleitungselement ist in einer bevorzugten Ausführungsform der Erfindung endseitig an dem wenigstens teilweise konisch verjüngenden Ende des Kohlefaserdämpferrohrs angeordnet.

Die Befestigung der Kohlefaserdämpferrohre an der Karosserie und/oder der/dem Radaufhängung/Radträger eines Fahrzeugs erfolgt üblicherweise über Lasteintragselemente, wobei im Rahmen der vorliegenden Erfindung unter einem Lasteinleitungselement ein Element verstanden wird, welches wirktechnisch mit dem Kohlefaserdämpferrohr verbunden ist und Betriebslasten in die Rohrstruktur des Kohlefaserdämpferrohr einleitet.
Das Lasteinleitungselement weist in einer bevorzugten Ausführungsform der Erfindung wenigstens ein Befestigungselement auf. Unter einem Befestigungselement wird im Rahmen der Erfindung ein Element verstanden, mit welchem das mindestens eine Lasteinleitungselement an einem Radträger oder der Karosserie eines Fahrzeugs wenigstens kraftschlüssig befestigt werden kann. Beispielsweise ist ein Befestigungselement ausgewählt unter einer Bohrung, einem Auge, einer Gabel und Kombinationen hiervon. Insbesondere kann das mindestens eine Lasteinleitungselement an einem Radträger, Lenker und/oder der Karosserie eines Fahrzeugs auch formschlüssig befestigt werden und beispielsweise ausgewählt unter einen Klemmsitz, einer Keilverbindung und Kombination hiervon sein.

In einer weiteren bevorzugten Ausführungsform der Erfindung ist die zwischen dem sich wenigstens teilweise konisch verjüngenden Ende des Kohlefaserdämpferrohrs und dem konischen Abschnitt des Adapters ausgebildete wenigstens kraftschlüssige Verbindung wenigstens eine flüssigkeitsundurchlässige Verbindung, welche das Kohlefaserdämpferrohr flüssigkeitsdicht abschließt.

In einer weiteren bevorzugten Ausführungsform der Erfindung ist in dem Bereich der zwischen dem sich wenigstens teilweise konisch verjüngenden Ende des Kohlefaserdämpferrohrs und dem konischen Abschnitt des Adapters ausgebildeten wenigstens kraftschlüssigen Verbindung wenigstens ein Dichtelement angeordnet. Das Dichtelement stellt eine wenigstens flüssigkeitsdichte Verbindung zwischen dem sich wenigstens teilweise konisch verjüngenden Ende des Kohlefaserdämpferrohrs und dem konischen Abschnitt des Adapters her und ist insbesondere aus im Stand der Technik bekannten statischen Dichtungen ausgewählt, deren Dichtelemente keinen Relativbewegungen, wie beispielsweise einer Abdichtung einer rotierenden Welle gegenüber einem statischen Gehäuse, ausgesetzt sind. Erfindungsgemäße Dichtungen sind beispielsweise ausgewählt aus der Gruppe von stoffschlüssigen Dichtungen, insbesondere Kleben und Schweißen, Flachdichtungen, Profildichtungen, Muffendichtungen, Dichtungsmassen, Dichtringen, insbesondere Gummidichtringen, Kautschukdichtringen Polymerdichtringen und Kombinationen hiervon.

In einer weiteren bevorzugten Ausführungsform der Erfindung ist die wenigstens eine flüssigkeitsundurchlässige Verbindung eine fluiddichte Verbindung, welche das Kohlefaserdämpferrohr fluiddicht abschließt.

In einer weiteren bevorzugten Ausführungsform der Erfindung ist das Lasteinleitungselement als ein Konterelement ausgebildet oder an dem Konterelement angeordnet.

In einer weiteren Ausführungsform der Erfindung ist das Verfahren zum Herstellen mindestens eines Kohlefaserdämpferrohres für Fahrzeuge, insbesondere Kraftfahrzeuge bevorzugt.

Unter einem Wickelkern wird im Rahmen der vorliegenden Erfindung ein formgebendes Element verstanden, auf welches eine Wickelbahn, insbesondere eine Bahn aus benetztem Kohlefaserfilament, aufgewickelt wird.
Im Rahmen der vorliegenden Erfindung wird unter einem Trennmittel eine Zusammensetzung verstanden, welche die Haftkraft zwischen der Mantelfläche eines erfindungsgemäßen Wickelkerns und des die Mantelfläche erfindungsgemäße umwickelten benetzten Kohlefaserfilaments wenigstens teilweise vermindert. Beispiele für ein erfindungsgemäßes Trennmittel sind als Wachse und Folientrennmittel und Kombinationen hiervon bekannt.
Unter einem Kohlefaserfilament wird im Rahmen der vorliegenden Erfindung eine Kohlefaser verstanden. Beispielsweise können 1.000 bis 24.000 Kohlefaserfilamente zu einem Multifilamentgarn (Roving) zusammengefasst werden, das aufgespult wird und insbesondere bei der Weiterverarbeitung in Wickelmaschinen eingesetzt wird.
Im Rahmen der vorliegenden Erfindung wird unter Benetzen das in Kontakt bringen von Oberflächen eines Körpers mit wenigstens einer Flüssigkeitskomponente verstanden. Für eine Benetzung sind im Stand der Technik eine Vielzahl von Verfahren, wie insbesondere Vakuum Injektion, Imprägnierverfahren, beispielsweise Prepregverfahren, Spaltimprägnierung, Laminierungsverfahren und Kombinationen hiervon bekannt. Beispielsweise können Kohlefaserfilamente auch in einem Tauchbad benetzt werden.

In einer weiteren bevorzugten Ausführungsform der Erfindung ist die Reihenfolge der Schritte a) bis h) beliebig.

Im Rahmen der vorliegenden Erfindung wird unter Verfestigen der Übergang der Kunststoff-Matrix, insbesondere des Benetzungsmittels von einem flüssigen in einen festen Aggregatzustand, verstanden. Beispielsweise kann abhängig von der Auswahl Kunststoff-Matrix/des Benetzungsmittels das Verfestigen chemisch und/oder durch Verfahrensparameter initiiert werden. Als Verfahrensparameter können Heizvorgänge, Kühlvorgänge, Strahlungsarten und -intensitäten beispielhaft angeführt werden. Insbesondere erfolgt ein Verfestigen durch Vernetzungsvorgänge und wird auch als Aushärten bezeichnet. Beispielsweise kann ein chemisches Aushärten von duroplastischen Harzsystemen oder ein Abkühlen von Thermoplasten aus dem schmelzflüssigen Zustand erfolgen.

In einer weiteren bevorzugten Ausführungsform der Erfindung wird das Verschrauben des mindestens einen Gewindeabschnitts des mindestens einen Adapters mit dem Gegengewinde des Konterelements an einem aus dem Ende des Kohlefaserdämpferrohrs hinaus ragenden Abschnitts durchgeführt wird.

In einer weiteren bevorzugten Ausführungsform der Erfindung wird das Verschrauben des mindestens einen Gewindeabschnitts des mindestens einen Adapters mit dem Gegengewinde des Konterelements im Bereich der Außenmantelfläche des aus dem Ende des Kohlefaserdämpferrohrs hinaus ragenden Adapters durchgeführt.

In einer weiteren bevorzugten Ausführungsform der Erfindung werden beim Anordnen in Schritt g) der in Schritt b) bereitgestellten Inlays zwischen den in Schritt a) bereitgestellten stabförmigen Wickelkern/en jeweils zwei der Inlays in Richtung der Wickelachse benachbart zueinander, insbesondere als Doppelinlay angeordnet. Beispielsweise sind zwei Inlays in direktem Kontakt zueinander auf der Wickelachse als Doppelinlay angeordnet. Insbesondere wird das in Schritt i) umwickelte und in Schritt j) verfestigte Doppelinlay beim Vereinzeln in Schritt k) wieder getrennt in zwei einzelne Inlays, welche in dem jeweiligen Kohledämpferrohr angeordnet sind.

In einer weiteren bevorzugten Ausführungsform der Erfindung wird bei der Ausbildung einer wenigstens kraftschlüssigen Verbindung in dem Bereich der zwischen dem sich wenigstens teilweise konisch verjüngenden Ende des Kohlefaserdämpferrohrs und dem konischen Abschnitt des Adapters in einem weiteren Schritt o) wenigstens ein Dichtelement angeordnet. Mit dem Anordnen des Dichtelements wird eine wenigstens flüssigkeitsdichte Verbindung, insbesondere fluiddichte Verbindung zwischen dem sich wenigstens teilweise konisch verjüngenden Ende des Kohlefaserdämpferrohrs und dem konischen Abschnitt des Adapters hergestellt. An Dichtelementen werden insbesondere aus im Stand der Technik bekannten Dichtelemente ausgewählt, deren Dichtelemente keinen Relativbewegungen, wie beispielsweise einer Abdichtung einer rotierenden Welle gegenüber einem statischen Gehäuse, ausgesetzt sind. Erfindungsgemäße Dichtungen sind beispielsweise ausgewählt aus der Gruppe von stoffschlüssigen Dichtungen, insbesondere Kleben und Schweißen, Flachdichtungen, Profildichtungen, Muffendichtungen, Dichtungsmassen, Dichtringen, insbesondere Gummidichtringen, Kautschukdichtringen Polymerdichtringen und Kombinationen hiervon.

### Kurze Beschreibung der Zeichnungen

Der erfindungsgemäße Schwingungsdämpfer, das erfindungsgemäße Kohlefaserdämpferrohr für einen Fahrzeugstoßdämpfer und das erfindungsgemäße Verfahren zum Herstellen mindestens eines Kohlefaserdämpferrohrs werden anhand der Zeichnungen erläutert.
- Fig. 1: zeigt schematisch eine Anordnung eines in einem Kohlefaserdämpferrohr angeordneten Adapters und eines daran anordenbaren Konterelements gemäß einer Ausführungsform der Erfindung,
- Fig. 2: zeigt schematisch eine Anordnung eines in einem Kohlefaserdämpferrohr angeordneten Adapters mit einem Dichtelement und einem an dem Adapter angeordneten Konterelement gemäß einer Ausführungsform der Erfindung,
- Fig. 3: zeigt schematisch ein als einen Adapter ausgestaltetes Lasteinleitungselement gemäß einer Ausführungsform der Erfindung,
- Fig. 4: zeigt schematisch ein als ein Konterelement ausgestaltetes Lasteinleitungselement gemäß einer Ausführungsform der Erfindung,
- Fig. 5: zeigt den Wickelvorgang eines benetzten Kohlefaserfilaments auf eine Anordnung umfassend zwei zwischen Wickelkernen nebeneinander angeordneten Inlays gemäß einer Ausführungsform der Erfindung.

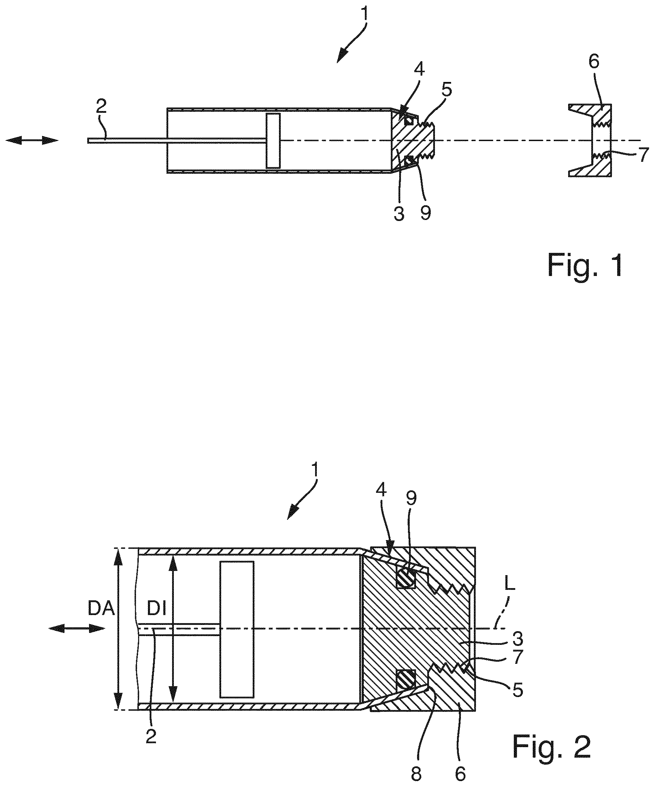

In der Fig. 1 ist ein Kohlefaserdämpferrohr 1 mit einer ein- und ausfahrbaren Kolbenstange 2 und einem innerhalb eines sich konisch verjüngenden Endes des Kohlefaserdämpferrohrs 1 angeordneten Adapters 3, aufweisend einen konischen Abschnitt 4, dargestellt. An der ein- und ausfahrbaren Kolbenstange 2 ist ein Kolben angeordnet. Der Adapter 3 weist einen Gewindeabschnitt 5 auf. In einem Bereich zwischen dem sich konisch verjüngenden Endes des Kohlefaserdämpferrohrs 1 und dem konischen Abschnitt 4 des innerhalb des sich konisch verjüngenden Endes des Kohlefaserdämpferrohrs 1 angeordneten Adapters 3 ist ein Dichtelement 9 angeordnet, welches wenigstens eine flüssigkeitsdichte Verbindung zwischen dem Kohlefaserdämpferrohr 1 und dem Adapter 3 herstellt. Entlang der verlängerten gestrichelt dargestellten Längsachse L des Kohlefaserdämpferrohrs 1 ist ein an dem Adapter 3 anordenbares Konterelement 6 mit einem Gegengewinde 7 dargestellt.

In der Fig. 2 ist das Konterelement 6 mit dem Gegengewinde 7 auf den Gewindeabschnitt 5 des in dem sich konisch verjüngenden Endes des Kohlefaserdämpferrohrs 1 angeordneten Adapters 3 aufgeschraubt. Mit dem Auf- bzw. Verschrauben des Konterelements 6 auf bzw. mit dem Adapter 3 über das Gegengewinde 7 und den Gewindeabschnitt 5 schlägt das Konterelement 6 an einer Stirnfläche 8 des sich konisch verjüngenden Endes des Kohlefaserdämpferrohrs 1 an und der Adapter 3 wird kraftschlüssig gegen die Stirnfläche 8 verspannt. Mit der Verschraubung des Gewindeabschnitts 5 mit dem Gegengewinde 7 entsteht eine formschlüssige Verbindung. Zwischen dem konischen Abschnitt 4 des Adapter 3 und dem sich konisch verjüngenden Endes des Kohlefaserdämpferrohrs 1 ist das Dichtelement 9 zur wenigstens in einem verspannten Zustand des Adapters 3 flüssigkeitsdichten Verbindung, insbesondere einer fluiddichten Verbindung zwischen dem Kohlefaserdämpferrohr 1 und dem Adapter 3 in einer Nut angeordnet. In Richtung der gestrichelt dargestellten Längsachse L des Kohlefaserdämpferrohrs 1 ist die Kolbenstange 2 mit dem daran angeordneten Kolben ein- und ausfahrbar. Das Kohlefaserdämpferrohr 1 hat einen dargestellten Dämpferrohrinnendurchmesser DI und einen Dämpferrohraußendurchmesser DA.

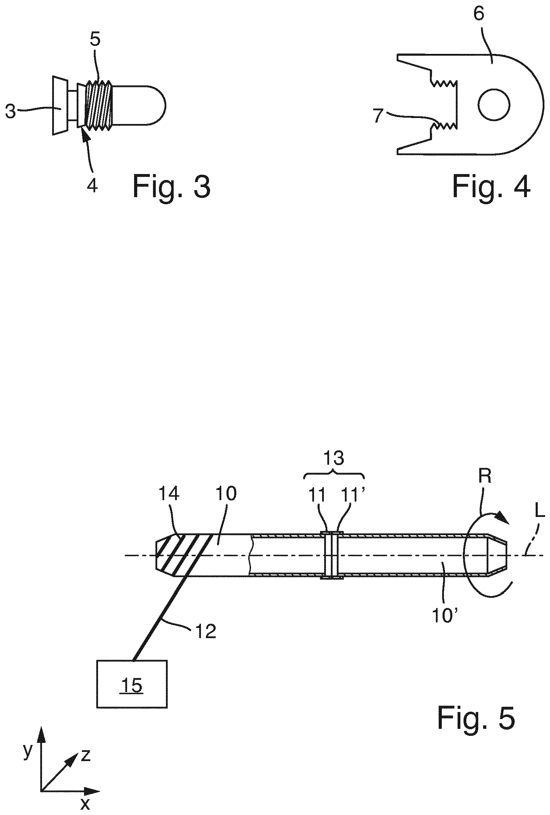

In der Fig. 3 ist der Adapter 3 mit dem konischen Abschnitt 4 mit einer Nut für das Dichtelement 9 und dem Gewindeabschnitt 5 als ein Lasteinleitungselement dargestellt.

In der Fig. 4 ist das Konterelement 6 mit dem Gegengewinde 7 als ein Lasteinleitungselement dargestellt.

In der Fig. 5 ist eine Anordnung von zwei Wickelkernen 10, 10' und zwei Inlays 11, 11' gemäß einer Ausführungsform der Erfindung dargestellt. Die zwei Inlays 11, 11' sind in Richtung der Längsachse L, welcher einer Wickelachse entspricht, benachbart zueinander, insbesondere als ein Doppelinlay 13 dargestellt. Eine Anordnung der Inlays 11, 11' zwischen den Wickelkernen 10, 10' ermöglicht eine Verlängerung der mit einer Wickelanlage zu umwickelnden Elemente und eine Anpassung an die Wickelbreite einer Wickelanlage. Bei der erfindungsgemäßen Herstellung mindestens eines Kohlefaserdämpferrohres 1 wird über einen traversierenden Wickelkopf 15 ein benetztes Kohlefaserfilament 12 um die beispielsweise angeordneten zwei Wickelkerne 10, 10' und zwei Inlays 11, 11' gewickelt, wobei ein Bereich eines mit benetztem Kohlefaserfilament 12 teilweise umwickelter Bereich 14 dargestellt ist. Bei dem Umwickeln mit dem benetzten Kohlefaserfilament 12 rotiert die Anordnung von zwei Wickelkernen 10, 10' und zwei Inlays 11, 11' beispielsweise in der Rotationsrichtung R. Die traversierende Bewegung des Wickelkopfes 10 ist beispielsweise in dem dargestellten Koordinatensystem möglich.

### Gewerbliche Anwendbarkeit

Schwingungsdämpfer für ein Fahrzeug insbesondere Kraftfahrzeug als auch Kohlefaserdämpferrohre für Fahrzeugstoßdämpfer der vorbeschriebenen Art werden in der Produktion von Fahrzeugen, insbesondere von Fahrwerken der Kraftfahrzeuge eingesetzt.

### Bezugszeichenliste

- 1 =: Kohlefaserdämpferrohr
- 2 =: Kolbenstange
- 3 =: Adapter
- 4 =: konischer Abschnitt
- 5 =: Gewindeabschnitt
- 6 =: Konterelement
- 7 =: Gegengewinde
- 8 =: Stirnfläche
- 9 =: Dichtelement
- 10, 10' =: Wickelkern(e)
- 11, 11' =: Inlays
- 12 =: benetztes Kohlefaserfilament
- 13 =: Doppelinlay
- 14 =: Mit benetztem Kohlefaserfilament teilweise umwickelter Bereich
- 15 =: Wickelkopf
- DI =: Dämpferrohrinnendurchmesser
- DA =: Dämpferrohraußendurchmesser
- L =: Längsachse
- R =: Rotationsrichtung

## Patentansprüche

1. Schwingungsdämpfer für ein Kraftfahrzeug, umfassend
- ein Kohlefaserdämpferrohr (1) mit einem Dämpferrohrinnendurchmesser (DI) und einem Dämpferrohraußendurchmesser (DA), wobei sich an mindestens einem Ende des Kohlefaserdämpferrohrs (1) der Dämpferrohrinnendurchmesser (DI) wenigstens teilweise konisch verjüngt,
- eine in dem Kohlefaserdämpferrohr (1) ein- und ausfahrbare Kolbenstange (2),
- mindestens ein Adapter (3) mit einem konischen Abschnitt (4), wobei der konische Abschnitt (4) des Adapters (3) innerhalb des sich wenigstens teilweise konisch verjüngenden Endes des Kohlefaserdämpferrohrs (1) angeordnet ist und eine wenigstens formschlüssige Verbindung wenigstens in Richtung des sich wenigstens teilweise konisch verjüngenden Endes des Kohlefaserdämpferrohrs (1) mit selbigen ausbildet,
**dadurch gekennzeichnet, dass**
der mindestens eine Adapter (3) mindestens einen Gewindeabschnitt (5) aufweist, wobei auf diesen Gewindeabschnitt (5) ein Konterelement (6) mit einem Gegengewinde (7) aufgeschraubt ist, welches an der Stirnfläche (8) des sich wenigstens teilweise konisch verjüngenden Endes des Kohlefaserdämpferrohrs (1) angeschlagen ist und den mindestens einen Adapter (3) kraftschlüssig gegen die Stirnfläche (8) des sich wenigstens teilweise konisch verjüngenden Endes des Kohlefaserdämpferrohrs (1) verspannt.

2. Schwingungsdämpfer nach Anspruch 1, **dadurch gekennzeichnet, dass** der mindestens eine Adapter (3) aus dem Ende des Kohlefaserdämpferrohrs (1) hinaus ragt und der mindestens eine Gewindeabschnitt (5) im Bereich der Außenmantelfläche des aus dem Ende des Kohlefaserdämpferrohrs (1) hinaus ragenden Adapters (3) angeordnet ist.

3. Schwingungsdämpfer nach einem der Ansprüche 1 bis 2, **dadurch gekennzeichnet, dass** das Konterelement (6) als ein Lasteinleitungselement ausgebildet oder an dem Konterelement (6) das eine Lasteinleitungselement angeordnet ist.

4. Schwingungsdämpfer nach einem der Ansprüche 1 bis 3, **dadurch gekennzeichnet, dass** in dem Bereich der zwischen dem sich wenigstens teilweise konisch verjüngenden Ende des Kohlefaserdämpferrohrs (1) und dem konischen Abschnitt (4) des Adapters (3) ausgebildeten wenigstens kraftschlüssigen Verbindung wenigstens ein Dichtelement (9) angeordnet ist.

5. Kohlefaserdämpferrohr (1) für einen Fahrzeugstoßdämpfer umfassend einen Dämpferrohrinnendurchmesser (DI) und einen Dämpferrohraußendurchmesser (DA), wobei sich an mindestens einem Ende des Kohlefaserdämpferrohrs (1) der Dämpferrohrinnendurchmesser (DI) wenigstens teilweise konisch verjüngt, umfassend mindestens ein Adapter (3) mit einem konischen Abschnitt (4), wobei der konische Abschnitt (4) des Adapters (3) innerhalb des sich wenigstens teilweise konisch verjüngenden Endes des Kohlefaserdämpferrohrs (1) angeordnet ist und eine wenigstens formschlüssige Verbindung wenigstens in Richtung des sich wenigstens teilweise konisch verjüngenden Endes des Kohlefaserdämpferrohrs (1) mit selbigen ausbildet,
**dadurch gekennzeichnet, dass**
der mindestens eine Adapter (3) mindestens einen Gewindeabschnitt (5) aufweist, wobei auf diesen Gewindeabschnitt (5) ein Konterelement (6) mit einem Gegengewinde (7) aufgeschraubt ist, welches an der Stirnfläche (8) des sich wenigstens teilweise konisch verjüngenden Endes des Kohlefaserdämpferrohrs (1) angeschlagen ist und den mindestens einen Adapter (3) kraftschlüssig gegen die Stirnfläche (8) des sich wenigstens teilweise konisch verjüngenden Endes des Kohlefaserdämpferrohrs (1) verspannt.

6. Lasteinleitungselement zum Anschluss an ein Kohlefaserdämpferrohr (1) des Schwingungsdämpfers nach einem der Ansprüche 1 bis 4 oder zum Anschluss an ein Kohlefaserdämpferrohr (1) nach Anspruch 5, **dadurch gekennzeichnet, dass** das Lasteinleitungselement wenigstens teilweise aus einem Kohlefaserverbundwerkstoff ausgebildet ist.

7. Verfahren zum Herstellen mindestens eines Kohlefaserdämpferrohrs (1) nach einem der Ansprüche 1 bis 6, umfassend die Schritte:
a) Bereitstellen eines oder mehrerer stabförmigen/r Wickelkerns/e (10, 10'), wobei der eine oder die mehreren stabförmige/n Wickelkern(e) (10, 10') wenigstens einen konisch verjüngenden Abschnitt mindestens für ein Kohlefaserdämpferrohrende jede(s) herzustellende(n) Kohlefaserdämpferrohr(e) (1) aufweist/en;
b) Bereitstellen eines oder mehrerer Inlays (11, 11');
c) Bereitstellen mindestens eines Trennmittels;
d) Bereitstellen mindestens eines benetzten Kohlefaserfilaments (12);
e) Bereitstellen eines oder mehrerer Adapter(s) (3), wobei der eine oder die mehreren Adapter (3) wenigstens einen konisch verjüngenden Abschnitt und mindestens ein Gewindeabschnitt (5) aufweist/en;
f) Bereitstellen eines oder mehrerer Konterelemente(s), wobei das eine oder die mehreren Konterelement(e) mindestens ein Gegengewinde (7) aufweist/en;
g) Anordnen des oder der in Schritt a) bereitgestellten stabförmigen Wickelkerns/e (10, 10') in einer Wickelvorrichtung und des oder der in Schritt b) bereitgestellten Inlays (11, 11') an dem oder zwischen den in Schritt a) bereitgestellten stabförmigen Wickelkern/en (10, 10') jeweils auf der dem konisch verjüngenden Abschnitt abgewandten Seite des/der jeweilig herzustellenden Kohlefaserdämpferrohre(s) (1);
h) Auftragen des in Schritt c) bereitgestellten Trennmittels wenigstens teilweise auf die Mantelfläche des/der in Schritt f) angeordneten stabförmigen Wickelkerns/e (10, 10');
i) Umwickeln des/der in Schritt g) angeordneten stabförmigen Wickelkerns/e (10, 10') und Inlays (11, 11') mit dem in Schritt d) bereitgestellten mindestens einen benetzten Kohlefaserfilament (12);
j) Verfestigen, insbesondere Aushärten des in Schritt i) umwickelten mindestens einen benetzten Kohlefaserfilaments (12) unter Ausbildung eines Kohlefaserverbundwerkstoffs;
k) Vereinzeln des in Schritt j) ausgebildeten Kohlefaserverbundwerkstoffs und Herstellen eines oder mehrerer Kohlefaserdämpferrohrs/e (1) unter Ausbildung einer Stirnfläche (8) eines sich wenigstens teilweise konisch verjüngenden Endes des einen oder der mehreren Kohlefaserdämpferrohrs/e (1);
l) Entfernen des/der in Schritt i) umwickelten stabförmigen Wickelkerns/e (10, 10') aus den in Schritt k) hergestellten einen oder mehreren Kohlefaserdämpferrohrs/e (1);
m) Anordnen mindestens eines der in Schritt e) bereitgestellten Adapter (3) jeweils innerhalb des wenigstens einen konisch verjüngenden Abschnitts eines Kohlefaserdämpferrohrendes eines Kohlefaserdämpferrohres (1) der in Schritt k) vereinzelten und in Schritt I) von stabförmigen Wickelkern/en (10, 10') entfernten einen oder mehreren Kohlefaserdämpferrohrs/e (1);
n) Verspannen des/der in Schritt m) angeordneten Adapters (3) mit dem in Schritt f) bereitgestellten einen oder mehrerer Konterelemente(s) gegen die in Schritt k) ausgebildete Stirnfläche (8) des sich wenigstens teilweise konisch verjüngenden Endes des einen oder der mehreren Kohlefaserdämpferrohrs/e (1);
wobei das Verspannen in Schritt n) durch Verschrauben des mindestens einen Gewindeabschnitts (5) des mindestens einen Adapters (3) mit dem Gegengewinde (7) des Konterelements (6) durchgeführt wird und eine wenigstens kraftschlüssige Verbindung ausgebildet wird.

8. Verfahren zum Herstellen mindestens eines Kohlefaserdämpferrohrs (1) nach Anspruch 7, **dadurch gekennzeichnet, dass** beim Anordnen in Schritt g) der in Schritt b) bereitgestellten Inlays (11, 11') zwischen den in Schritt a) bereitgestellten stabförmigen Wickelkern/en (10, 10') jeweils zwei der Inlays (11, 11') in Richtung der Wickelachse benachbart zueinander, insbesondere als Doppelinlay (13) angeordnet werden.

9. Verfahren zum Herstellen mindestens eines Kohlefaserdämpferrohrs (1) nach einem der Ansprüche 7 bis 8, **dadurch gekennzeichnet, dass** bei der Ausbildung einer wenigstens kraftschlüssigen Verbindung in dem Bereich der zwischen dem sich wenigstens teilweise konisch verjüngenden Ende des Kohlefaserdämpferrohrs (1) und dem konischen Abschnitt (4) des Adapters (3) in einem weiteren Schritt o) wenigstens ein Dichtelement (9) angeordnet wird.

10. Verwendung eines Kohlefaserdämpferrohrs (1) für einen Schwingungsdämpfer, umfassend einen Dämpferrohrinnendurchmesser (DI) und einen Dämpferrohraußendurchmesser (DA), wobei sich an mindestens einem Ende des Kohlefaserdämpferrohrs (1) der Dämpferrohrinnendurchmesser (DI) wenigstens teilweise konisch verjüngt, umfassend mindestens ein Adapter (3) mit einem konischen Abschnitt (4), wobei der konische Abschnitt (4) des Adapters (3) innerhalb des sich wenigstens teilweise konisch verjüngenden Endes des Kohlefaserdämpferrohrs (1) angeordnet ist und eine wenigstens formschlüssige Verbindung wenigstens in Richtung des sich wenigstens teilweise konisch verjüngenden Endes des Kohlefaserdämpferrohrs (1) mit selbigen ausbildet,
**dadurch gekennzeichnet, dass**
der mindestens eine Adapter (3) mindestens einen Gewindeabschnitt (5) aufweist, wobei auf diesen Gewindeabschnitt (5) ein Konterelement (6) mit einem Gegengewinde (7) aufgeschraubt ist, welches an der Stirnfläche (8) des sich wenigstens teilweise konisch verjüngenden Endes des Kohlefaserdämpferrohrs (1) angeschlagen ist und den mindestens einen Adapter (3) kraftschlüssig gegen die Stirnfläche (8) des sich wenigstens teilweise konisch verjüngenden Endes des Kohlefaserdämpferrohrs (1) verspannt.

## Claims

1. Vibration damper for a motor vehicle, comprising
- a carbon-fibre damper tube (1) having a damper tube internal diameter (DI) and a damper tube external diameter (DA), wherein the damper tube internal diameter (DI) at least in part tapers in a conical manner on at least one end of the carbon-fibre damper tube (1);
- a piston rod (2) that is retractable into and deployable from the carbon-fibre damper tube (1);
- at least one adapter (3) having a conical portion (4), wherein the conical portion (4) of the adapter (3) is disposed within the end of the carbon-fibre damper tube (1) that at least in part tapers in a conical manner, and at least in the direction of the end of the carbon-fibre damper tube (1) that at least in part tapers in a conical manner configures an at least form-fitting connection with said carbon-fibre damper tube (1),
**characterized in that**
the at least one adapter (3) comprises at least one threaded portion (5), wherein a counter element (6) having a counter thread (7) is screw-fitted to said threaded portion (5), said counter element (6) being stopped on the end face (8) of the end of the carbon-fibre damper tube (1) that at least in part tapers in a conical manner and bracing the at least one adapter (3) in a force-fitting manner in relation to the end face (8) of the end of the carbon-fibre damper tube (1) that at least in part tapers in a conical manner.

2. Vibration damper according to Claim 1, **characterized in that** the at least one adapter (3) protrudes from the end of the carbon-fibre damper tube (1), and the at least one threaded portion (5) is disposed in the region of the external shell face of the adapter (3) that protrudes from the end of the carbon-fibre damper tube (1).

3. Vibration damper according to one of Claims 1 to 2, **characterized in that** the counter element (6) is configured as a load-introduction element, or the one load-introduction element is disposed on the counter element (6).

4. Vibration damper according to one of Claims 1 to 3, **characterized in that** at least one sealing element (9) is disposed in the region of the at least force-fitting connection configured between the end of the carbon-fibre damper tube (1) that at least in part tapers in a conical manner and the conical portion (4) of the adapter (3).

5. Carbon-fibre damper tube (1) for a vehicle shock absorber, comprising a damper tube internal diameter (DI) and a damper tube external diameter (DA), wherein the damper tube internal diameter (DI) at least in part tapers in a conical manner on at least one end of the carbon-fibre damper tube (1), comprising at least one adapter (3) having a conical portion (4), wherein the conical portion (4) of the adapter (3) is disposed within the end of the carbon-fibre damper tube (1) that at least in part tapers in a conical manner and at least in the direction of the end of the carbon-fibre damper tube (1) that at least in part tapers in a conical manner configures an at least form-fitting connection with said carbon-fibre damper tube (1),
**characterized in that**
the at least one adapter (3) comprises at least one threaded portion (5), wherein a counter element (6) having a counter thread (7) is screw-fitted to said threaded portion (5), said counter element (6) being stopped on the end face (8) of the end of the carbon-fibre damper tube (1) that at least in part tapers in a conical manner and bracing the at least one adapter (3) in a force-fitting manner in relation to the end face (8) of the end of the carbon-fibre damper tube (1) that at least in part tapers in a conical manner.

6. Load-introduction element for connecting to a carbon-fibre damper tube (1) of the vibration damper according to one of Claims 1 to 4, or for connecting to a carbon-fibre damper tube (1) according to Claim 5, **characterized in that** the load-introduction element at least in part is configured from a carbon-fibre composite material.

7. Method for producing at least one carbon-fibre damper tube (1) according to one of Claims 1 to 6, said method comprising the steps:
a) providing one or a plurality of rod-shaped winding core/cores (10, 10'), wherein the one or the plurality of rod-shaped winding core/cores (10, 10') comprises/comprise at least one conically tapered portion at least for a carbon-fibre damper tube end of each carbon-fibre damper tube/tubes to be produced;
b) providing one or a plurality of inlays (11, 11');
c) providing at least one release agent;
d) providing at least one wetted carbon-fibre filament (12);
e) providing one or a plurality of adapter/adapters (3), wherein the one or the plurality of adapters (3) comprises/comprise at least one conically tapered portion and at least one threaded portion (5) ;
f) providing one or a plurality of counter element/elements, wherein the one or the plurality of counter element/elements comprises/comprise at least one counter thread (7) ;
g) disposing the rod-shaped winding core/cores (10, 10') provided in step a) in a winding device, and the inlay (11, 11') provided in step b) on or between the rod-shaped winding core/cores (10, 10') provided in step a) in each case on the side of the carbon fibre tube/tubes (1) to be produced that faces away from the conically tapered portion;
h) applying the release agent provided in step c) to at least part of the shell face of the rod-shaped winding core/cores (10, 10') disposed in step f);
i) wrapping the rod-shaped winding core/cores (10, 10') and the inlay (11, 11') disposed in step g) with the at least one wetted carbon-fibre filament (12) provided in step d);
j) solidifying, in particular curing, the at least one wetted carbon-fibre filament (12) wrapped in step i) while configuring a carbon-fibre composite material;
k) singularizing the carbon-fibre composite material configured in step j), and producing one or a plurality of carbon-fibre damper tube/tubes (1) while configuring an end face (8) of an end of the one or the plurality of carbon-fibre damper tube/tubes (1) that at least in part tapers in a conical manner;
l) removing the rod-shaped winding core/cores (10, 10') wrapped in step i) from the one or the plurality of carbon fibre damper tube/tubes (1) produced in step k);
m) disposing at least one of the adapters (3) provided in step e) in each case within the at least one conically tapered portion of a carbon-fibre damper tube end of a carbon-fibre damper tube (1) of the one or the plurality of carbon-fibre damper tubes/tubes (1) singularized in step k) and removed from the rod-shaped winding core/cores (10, 10') in step 1);
n) bracing the adapter/adapters (3) disposed in step m) by way of the one or the plurality of counter element/elements provided in step f) in relation to the end face (8) configured in step k) of the end of the one or the plurality of carbon-fibre damper tube/tubes (1) that at least in part tapers in a conical manner,
wherein the bracing in step n) is carried out by screw-fitting the at least one threaded portion (5) of the at least one adapter (3) to the counter thread (7) of the counter element (6), and an at least force-fitting connection is configured.

8. Method for producing at least one carbon-fibre damper tube (1) according to Claim 7, **characterized in that,** when in step g) disposing the inlays (11, 11') provided in step b) between the rod-shaped winding core/cores (10, 10') provided in step a), two of the inlays (11, 11') are in each case disposed so as to neighbour one another in the direction of the winding axis, in particular so as to form a double inlay (13).

9. Method for producing at least one carbon-fibre damper tube (1) according to one of Claims 7 to 8, **characterized in that,** when configuring an at least force-fitting connection, in a further step o) at least one sealing element (9) is disposed in the region of the between the end of the carbon-fibre damper tube (1) that at least in part tapers in a conical manner and the conical portion (4) of the adapter (3).

10. Use of a carbon-fibre damper tube (1) for a vibration damper, comprising a damper tube internal diameter (DI) and a damper tube external diameter (DA), wherein the damper tube internal diameter (DI) at least in part tapers in a conical manner on at least one end of the carbon-fibre damper tube (1), comprising at least one adapter (3) having a conical portion (4), wherein the conical portion (4) of the adapter is disposed within the end of the carbon-fibre damper tube (1) that at least in part tapers in a conical manner, and at least in the direction of the end of the carbon-fibre damper tube (1) that at least in part tapers in a conical manner configures an at least form-fitting connection with said carbon-fibre damper tube (1),
**characterized in that**
the at least one adapter (3) comprises at least one threaded portion (5), wherein a counter element (6) having a counter thread (7) is screw-fitted to said thread portion (5), said counter element (5) being stopped on the end face (8) of the end of the carbon-fibre damper tube (1) that at least in part tapers in a conical manner and bracing the at least one adapter (3) in a force-fitting manner in relation to the end face (8) of the end of the carbon-fibre damper tube (1) that at least in part tapers in a conical manner.

## Revendications

1. Amortisseur de vibrations pour un véhicule automobile, comprenant :
- un tube d'amortisseur en fibres de carbone (1) comprenant un diamètre intérieur de tube d'amortisseur (DI) et un diamètre extérieur de tube d'amortisseur (DA), le diamètre intérieur de tube d'amortisseur (DI) se rétrécissant au moins en partie sous forme conique au niveau d'au moins une extrémité du tube d'amortisseur en fibres de carbone (1),
- une tige de piston (2) pouvant être rentrée et sortie dans le tube d'amortisseur en fibres de carbone (1),
- au moins un adaptateur (3) avec une portion conique (4), la portion conique (4) de l'adaptateur (3) étant disposée à l'intérieur de l'extrémité du tube d'amortisseur en fibres de carbone (1) se rétrécissant au moins en partie sous forme conique et établissant une connexion au moins par engagement par correspondance de formes au moins dans la direction de l'extrémité du tube d'amortisseur en fibres de carbone (1) se rétrécissant au moins en partie sous forme conique avec cette dernière,
**caractérisé en ce que**
l'au moins un adaptateur (3) présente au moins une portion filetée (5), un contre-élément (6) avec un filetage conjugué (7) étant vissé sur cette portion filetée (5), lequel est appliqué contre la surface frontale (8) de l'extrémité du tube d'amortisseur en fibres de carbone (1) se rétrécissant au moins en partie sous forme conique et serrant l'au moins un adaptateur (3) par engagement par force contre la surface frontale (8) de l'extrémité du tube d'amortisseur en fibres de carbone (1) se rétrécissant au moins en partie sous forme conique.

2. Amortisseur de vibrations selon la revendication 1, **caractérisé en ce que** l'au moins un adaptateur (3) fait saillie hors de l'extrémité du tube d'amortisseur en fibres de carbone (1) et l'au moins une portion filetée (5) est disposée dans la région de la surface d'enveloppe extérieure de l'adaptateur (3) faisant saillie hors de l'extrémité du tube d'amortisseur en fibres de carbone (1).

3. Amortisseur de vibrations selon l'une quelconque des revendications 1 et 2, **caractérisé en ce que** le contre-élément (6) est réalisé sous la forme d'un élément d'introduction de charge ou ledit élément d'introduction de charge est disposé au niveau du contre-élément (6).

4. Amortisseur de vibrations selon l'une quelconque des revendications 1 à 3, **caractérisé en ce que** dans la région de la connexion au moins par engagement par force réalisée entre l'extrémité du tube d'amortisseur en fibres de carbone (1) se rétrécissant au moins en partie sous forme conique et la portion conique (4) de l'adaptateur (3), est disposé au moins un élément d'étanchéité (9).

5. Tube d'amortisseur en fibres de carbone (1) pour un pare-chocs de véhicule, comprenant un diamètre intérieur de tube d'amortisseur (DI) et un diamètre extérieur de tube d'amortisseur (DA), le diamètre intérieur de tube d'amortisseur (DI) se rétrécissant au moins en partie sous forme conique au niveau d'au moins une extrémité du tube d'amortisseur en fibres de carbone (1), comprenant au moins un adaptateur (3) avec une portion conique (4), la portion conique (4) de l'adaptateur (3) étant disposée à l'intérieur de l'extrémité du tube d'amortisseur en fibres de carbone (1) se rétrécissant au moins en partie sous forme conique et établissant une connexion au moins par engagement par correspondance de formes au moins dans la direction de l'extrémité du tube d'amortisseur en fibres de carbone (1) se rétrécissant au moins en partie sous forme conique avec cette dernière,
**caractérisé en ce que**
l'au moins un adaptateur (3) présente au moins une portion filetée (5), un contre-élément (6) avec un filetage conjugué (7) étant vissé sur cette portion filetée (5), lequel est appliqué contre la surface frontale (8) de l'extrémité du tube d'amortisseur en fibres de carbone (1) se rétrécissant au moins en partie sous forme conique et serrant l'au moins un adaptateur (3) par engagement par force contre la surface frontale (8) de l'extrémité du tube d'amortisseur en fibres de carbone (1) se rétrécissant au moins en partie sous forme conique.

6. Élément d'introduction de charge pour le raccordement à un tube d'amortisseur en fibres de carbone (1) de l'amortisseur de vibrations selon l'une quelconque des revendications 1 à 4 ou pour le raccordement à un tube d'amortisseur en fibres de carbone (1) selon la revendication 5, **caractérisé en ce que** l'élément d'introduction de charge est réalisé au moins en partie en un matériau composite renforcé par des fibres de carbone.

7. Procédé de fabrication d'au moins un tube d'amortisseur en fibres de carbone (1) selon l'une quelconque des revendications 1 à 6, comprenant les étapes suivantes :
a) fourniture d'un ou plusieurs noyaux d'enroulement en forme de barre (10, 10'), le ou les plusieurs noyaux d'enroulement en forme de barre (10, 10') présentant au moins une portion se rétrécissant sous forme conique au moins pour une extrémité de tube d'amortisseur en fibres de carbone de chaque tube d'amortisseur en fibres de carbone (1) à fabriquer ;
b) fourniture d'un ou plusieurs inserts (11, 11') ;
c) fourniture d'au moins un moyen de séparation ;
d) fourniture d'au moins un filament en fibres de carbone mouillé (12) ;
e) fourniture d'un ou plusieurs adaptateurs (3), le ou les plusieurs adaptateurs (3) présentant au moins une portion se rétrécissant sous forme conique et au moins une portion filetée (5) ;
f) fourniture d'un ou plusieurs contre-éléments, le ou les plusieurs contre-éléments présentant au moins un contre-filetage (7) ;
g) agencement du ou des noyaux d'enroulement en forme de barre (10, 10') fournis à l'étape a) dans un dispositif d'enroulement et du ou des inserts (11, 11') fournis à l'étape b) sur le noyau d'enroulement ou entre les noyaux d'enroulement (10, 10') en forme de barre fournis à l'étape a), à chaque fois sur le côté opposé à la portion se rétrécissant sous forme conique du ou des tubes d'amortisseur en fibres de carbone (1) devant à chaque fois être fabriqués ;
h) application du moyen de séparation fourni à l'étape c) au moins en partie sur la surface d'enveloppe du ou des noyaux d'enroulement en forme de barre (10, 10') agencés à l'étape f) ;
i) enroulement du ou des noyaux d'enroulement (10, 10') en forme de barre agencés à l'étape g) et des inserts (11, 11') avec l'au moins un filament en fibres de carbone mouillé (12) fourni à l'étape d) ;
j) solidification, en particulier durcissement de l'au moins un filament en fibres de carbone mouillé (12) enroulé à l'étape i) en réalisant un matériau composite renforcé par des fibres de carbone ;
k) séparation du matériau composite renforcé par des fibres de carbone réalisé à l'étape j) et fabrication d'un ou plusieurs tubes d'amortisseur en fibres de carbone (1) en réalisant une surface frontale (8) d'une extrémité du ou plusieurs des tubes d'amortisseur en fibres de carbone (1) se rétrécissant au moins en partie sous forme conique ;
l) enlèvement du ou des noyaux d'enroulement (10, 10') en forme de barre enroulés à l'étape i) du ou des plusieurs tubes d'amortisseur en fibres de carbone (1) fabriqués à l'étape k) ;
m) agencement d'au moins l'un des adaptateurs (3) fournis à l'étape e) à chaque fois à l'intérieur de l'au moins une portion se rétrécissant sous forme conique d'une extrémité de tube d'amortisseur en fibres de carbone d'un tube d'amortisseur en fibres de carbone (1) du ou des plusieurs tubes d'amortisseur en fibres de carbone (1) séparés à l'étape k) et enlevés à l'étape l) du ou des noyaux d'enroulement en forme de barre (10, 10') ;
n) serrage du ou des adaptateurs (3) agencés à l'étape m) avec le ou les plusieurs contre-éléments fournis à l'étape f) contre la surface frontale (8) réalisée à l'étape k) de l'extrémité se rétrécissant au moins en partie sous forme conique du ou des plusieurs tubes d'amortisseur en fibres de carbone (1) ;
le serrage à l'étape n) étant effectué par vissage de l'au moins une portion filetée (5) de l'au moins un adaptateur (3) avec le filetage conjugué (7) du contre-élément (6) et une connexion au moins par engagement par force étant réalisée.

8. Procédé de fabrication d'au moins un tube d'amortisseur en fibres de carbone (1) selon la revendication 7, **caractérisé en ce que** dans le cas de l'agencement à l'étape g) des inserts (11, 11') fournis à l'étape b) entre le ou les noyaux d'enroulement (10, 10') en forme de barre fournis à l'étape a), à chaque fois deux des inserts (11, 11') sont disposés dans la direction de l'axe d'enroulement l'un à côté de l'autre, en particulier sous forme de doubles inserts (13).

9. Procédé de fabrication d'au moins un tube d'amortissement en fibres de carbone (1) selon l'une quelconque des revendications 7 et 8, **caractérisé en ce que,** lors de la réalisation d'une connexion au moins par engagement par force, dans la région du entre l'extrémité se rétrécissant au moins en partie sous forme conique du tube d'amortisseur en fibres de carbone (1) et la portion conique (4) de l'adaptateur (3), dans une étape supplémentaire o) au moins un élément d'étanchéité (9) est agencé.

10. Utilisation d'un tube d'amortisseur en fibres de carbone (1) pour un amortisseur de vibrations, comprenant un diamètre intérieur de tube d'amortisseur (DI) et un diamètre extérieur de tube d'amortisseur (DA), le diamètre intérieur de tube d'amortisseur (DI) se rétrécissant au moins en partie sous forme conique au niveau d'au moins une extrémité du tube d'amortisseur en fibres de carbone (1), comprenant au moins un adaptateur (3) avec une portion conique (4), la portion conique (4) de l'adaptateur (3) étant disposée à l'intérieur de l'extrémité du tube d'amortisseur en fibres de carbone (1) se rétrécissant au moins en partie sous forme conique et établissant une connexion au moins par engagement par correspondance de formes au moins dans la direction de l'extrémité du tube d'amortisseur en fibres de carbone (1) se rétrécissant au moins en partie sous forme conique avec cette dernière, **caractérisée en ce que**
l'au moins un adaptateur (3) présente au moins une portion filetée (5), un contre-élément (6) avec un filetage conjugué (7) étant vissé sur cette portion filetée (5), lequel est appliqué contre la surface frontale (8) de l'extrémité du tube d'amortisseur en fibres de carbone (1) se rétrécissant au moins en partie sous forme conique et serrant l'au moins un adaptateur (3) par engagement par force contre la surface frontale (8) de l'extrémité du tube d'amortisseur en fibres de carbone (1) se rétrécissant au moins en partie sous forme conique.
